Europäisches Patentamt

European Patent Office

Office européen des brevets

(19)

(11) Veröffentlichungsnummer : **0 082 522
B1**

# (12)  EUROPÄISCHE PATENTSCHRIFT

(45) Veröffentlichungstag der Patentschrift :
**24.04.85**

(21) Anmeldenummer : **82111834.6**

(22) Anmeldetag : **20.12.82**

(51) Int. Cl.⁴ : **C 09 B   3/18, C 09 B 67/00**

(54) Verfahren zur Herstellung eines Perylentetracarbonsäuredianhydrid-Pigments und seine Verwendung.

(30) Priorität : **23.12.81 DE 3150956**

(43) Veröffentlichungstag der Anmeldung :
**29.06.83 Patentblatt 83/26**

(45) Bekanntmachung des Hinweises auf die Patenterteilung : **24.04.85 Patentblatt 85/17**

(84) Benannte Vertragsstaaten :
**CH DE FR GB LI**

(56) Entgegenhaltungen :
**DE-A- 1 806 403
DE-B- 1 115 711
FR-A- 2 090 249
GB-A- 2 021 620
Die Akte enthält technische Angaben die nach dem
Eingang der Anmeldung eingereicht wurden und die
nicht in dieser Patentschrift enthalten sind.**

(73) Patentinhaber : **HOECHST AKTIENGESELLSCHAFT
Postfach 80 03 20
D-6230 Frankfurt am Main 80 (DE)**

(72) Erfinder : **Spietschka, Ernst, Dr.
Kirchweg 3
D-6270 Idstein/Taunus (DE)**
Erfinder : **Urban, Manfred
Steigerwaldstrasse 2A
D-6200 Wiesbaden (DE)**

## Beschreibung

Die Verwendung von Perylen-3,4,9,10-tetracarbonsäuredianhydrid, im folgenden als « Dianhydrid » bezeichnet, als Pigment zum Färben von Lacken und plastischen Massen ist bekannt. Zur Herstellung pigmentärer Formen dieser Verbindung wurden beispielsweise die folgenden Wege beschrieben :

Gemäß DE-PS 2 025 289 wird aus einer alkalischen, wäßrigen Lösung eines Alkalisalzes der 3,4,9,10-Perylentetracarbonsäure, im folgenden auch als Tetracarbonsäure oder Persäure bezeichnet, bei − 20 bis + 30 °C mit einer Säure die freie Tetracarbonsäure ausgefällt und die Suspension in Gegenwart eines organischen Lösemittels zur Überführung in das Dianhydrid auf 35 bis 200 °C erhitzt. Hierbei kann vor, während oder nach der Zugabe der Säure ein Dispergiermittel zugesetzt werden. Das so erhaltene Pigment färbt Lacke in klaren Rottönen und weist eine gute Farbstärke, Wetter-, Licht- und Überlackierechtheit auf.

Aus der DE-PS 1 806 403 ist es bekannt, farbstarke, reine und transparente Perylen-Pigmente dadurch herzustellen, daß das Pigment aus der wäßrigen Lösung eines Salzes der Perylen-3,4,9,10-tetracarbonsäure in Gegenwart von mindestens 0,2 Gew.-% eines Dispergators, bezogen auf das Gewicht der Tetracarbonsäure, bei 20 bis 100 °C durch Zusatz einer Säure ausgefällt wird.

In der DE-OS 2 919 519 ist beschrieben, daß man Dianhydrid mit verbesserter Dispergierbarkeit erhält, wenn man zu einer wäßrig-alkalischen Lösung eines Alkalisalzes der Perylentetracarbonsäure mindestens ein primäres aliphatisches oder cycloaliphatisches Amin mit mindestens 12 C-Atomen zugibt, das Reaktionsgemisch ansäuert, wobei die freie Tetracarbonsäure ausfällt, welche durch Erhitzen des Reaktionsgemisches in das Dianhydrid übergeführt wird. Das Ansäuern kann hierbei so erfolgen, daß man das Amin in einem organischen Lösemittel vorlegt, hierzu die zur Freisetzung der Tetracarbonsäure erforderliche Menge einer anorganischen Säure zugibt und in dieses Gemisch die wäßrige Lösung des Alkalisalzes der Perylentetracarbonsäure zutropfen läßt. In dem erhaltenen Pigment weist ein Teil Moleküle anstelle der Anhydridgruppierung eine sich vom eingesetzten Amin ableitende Imidgruppe auf, deren Einführung im Hinblick auf eine verbesserte Kunststoffeinfärbung erfolgt.

Es wurde nun gefunden, daß man ein Dianhydrid besonders hoher Qualität erhält, wenn man die wäßrige Lösung der Alkalisalze der Perylen-3,4,9,10-tetracarbonsäure unter Zusatz von oberflächenaktiven Mitteln bei 0 bis 90 °C, vorzugsweise 0 bis 30 °C, in eine vorgelegte Säure bei einem pH-Wert unter 3 einlaufen läßt und die erhaltene Suspension bei 50 bis 150 °C in das Dianhydrid überführt. Vorteilhaft verfährt man hierbei so, daß man die wäßrige Alkalisalzlösung aus Perylen-3,4,9,10-tetracarbonsäure und überschüssigem wäßrigem Alkali herstellt und die Säure in einem Überschuß von 0,1 bis 6 Äquivalenten, bezogen auf eingesetztes Alkali, vorlegt. Die Transparenz des so erhaltenen Dianhydrids kann durch die Konzentration der Alkalisalzlösung und der Säure beeinflußt werden.

Vorzugsweise schließt sich an diese Synthese eine Lösemittelbehandlung an, bei der ein organisches Lösemittel nach beendeter Dianhydridbildung der sauren Suspension oder vorzugsweise nach Isolierung dem feuchten Preßkuchen zugegeben und bei 35 bis 200 °C, vorzugsweise 70 bis 120 °C, nachbehandelt wird.

Als organische Lösemittel für die Nachbehandlung eignen sich solche, die Dianhydrid nicht oder nur wenig anlösen, beispielsweise aliphatische Alkohole mit bis zu 5 Kohlenstoffatomen, aromatische Chlorkohlenwasserstoffe, Ketone, Ester niederer Carbonsäuren sowie aliphatische Chlorkohlenwasserstoffe.

Das Lösemittel kann in der 0,1 bis 30-fachen Gewichtsmenge, bezogen auf Persäure, zugesetzt werden ; bevorzugt ist die 0,5 bis 5-fache, insbesondere die gleiche Gewichtsmenge.

Von der oberflächenaktiven Substanz werden vorzugsweise 0,1 bis 30 %, insbesondere 5 bis 15 %, bezogen auf das Gewicht des Dianhydrids, zugesetzt. Hierfür eignen sich nicht-ionogene, kationaktive und insbesondere anionaktive Substanzen.

Als nicht-ionogene Tenside kommen Fettalkoholpolyglykolether, Fettsäurepolyglykolester und Alkylphenolpolyglykolether in Betracht.

Als (potentiell) kationaktive Substanzen seien genannt : Ammoniumsalze oder -hydroxide, Fettaminoxethylate, Fettaminpolyglykolether und basische Kolophoniumderivate.

Als anionaktive Tenside kommen Fettsäuretauride, Fettsäure-N-methyltauride, Fettsäureisethionate, Alkylnaphthalinsulfonate, Alkylphenylsulfonate, Alkylphenolpolyglykolethersulfate, Fettalkoholpolyglykolethersulfate sowie insbesondere Seifen und Harze, also Alkalisalze von Fettsäuren, Naphthensäuren und Harzsäuren sowie modifizierte Kolophonium-maleinatharze oder Fumarsäure-Kolophoniumharze in Betracht.

Die Auswahl der zugesetzten oberflächenaktiven Substanzen und Lösemittel richtet sich nach dem beabsichtigten Einsatz der Pigmente ; so ist beispielsweise eine Kombination von Harzseife mit niederen Alkoholen besonders geeignet für Pigmente, die in Metallic-Lacksystemen eingesetzt werden sollen.

Eine besonders bevorzugte Ausgestaltung des erfindungsgemäß Verfahrens besteht darin, daß man Perylen 3,4,9,10-tetracarbonsäure mit einem geringen Überschuß an Kaliumhydroxidlösung löst, die wäßrige Lösung des Kaliumsalzes bei 0 bis 30 °C mit der oberflächenaktiven Substanz versetz und das Gemisch in 5 bis 60 Minuten auf einen Überschuß Säure, vorzugsweise 0,1 bis 6 Mol Überschuß an verdünnter Salz- oder Schwefelsäure, bezogen auf eingesetztes Kaliumhydroxid, gibt.

Die ausgefällte Tetracarbonsäure wird dann auf 50 bis 150 °C erhitzt, nach ihrer vollständigen Überführung in das Dianhydrid isoliert und der feuchte Preßkuchen mit der bis zu 5-fachen Menge an organischem Lösemittel bei 70 bis 120 °C behandelt.

Das erfindungsgemäß hergestellte Dianhydrid eignet sich zum Pigmentieren von plastischen Massen und Lacken, wegen ihrer hohen Transparenz, Farbstärke, Licht- und Wetterechtheit sowie ihrer guten Verträglichkeit mit allen gängigen Metallic-Lacksystemen insbesondere für Auto-Metallic-Lacke.

In den folgenden Beispielen beziehen sich Prozentangaben auf das Gewicht.

Beispiel 1

50 g Perylen-3,4,9,10-tetracarbonsäuredianhydrid wurden in eine Lösung von 63 g Kaliumcarbonat in 2 255 ml Wasser eingetragen und die Mischung 1 Stunde bei 95 °C gerührt. Nach Zugabe von 26 g Tierkohle wurde 15 Minuten nachgerührt und geklärt. Zum Filtrat gab man eine Lösung von 5 g eines alkohollöslichen Fumarsäure-Kolophoniumharzes (Dichte 1,15, Säurezahl 110-130, Farbzahl unter 30) in 75 g 1 %iger Kalilauge und rührt 1/2 Stunde bei 60 °C nach. Nach Abkühlen auf 25 °C ließ man diese Lösung im Laufe von 15 Minuten in eine Mischung aus 600 ml Wasser und 600 ml 31 %iger Salzsäure zutropfen, erhitzte dann die Mischung auf 80 °C und rührte eine Stunde bei dieser Temperatur nach. Das Produkt wurde heiß abgesaugt, neutral gewaschen und bei 80 °C getrocknet. Man erhielt 50,9 g Dianhydrid-Pigment, das sich hervorragend zum Färben von Lacken, insbesondere Metallic-Lacken, eignet.

Beispiel 2

50 g Perylen-3,4,9,10-tetracarbonsäuredianhydrid wurden in eine Lösung von 35 g Kaliumhydroxid (85 %ig) in 1 780 ml Wasser eingetragen, die Mischung eine Stunde bei 95 °C gerührt und filtriert. Bei 25 °C wurde eine Lösung von 7 g des in Beispiel 1 genannten Harzes in 140 g 1 %iger Kalilauge zugegeben und die Mischung eine halbe Stunde lang bei 25 °C nachgerührt. Diese Lösung ließ man dann im Lauf von 15 Minuten in eine Mischung aus 215 ml Wasser und 215 ml 31 %iger Salzsäure zutropfen, erhitzte die gebildete Suspension auf 80 °C und rührte eine Stunde bei dieser Temperatur nach. Das Produkt wurde heiß abgesaugt, neutral gewaschen und bei 80 °C getrocknet. Man erhielt 55,6 g Pigment, das sich hervorragend zum Färben von Metallic-Lacken eignet.

Beispiel 3

50 g Perylen-3,4,9,10-tetracarbonsäuredianhydrid wurden in eine Lösung von 35 g Kaliumhydroxid (85 %ig) in 800 ml Wasser eingetragen und durch einstündiges Rühren bei 25 °C gelöst. Nach Zugabe von 10 g einer handelsüblichen 50 %igen Harzseife wurde eine halbe Stunde nachgerührt und geklärt. Das Filtrat ließ man im Lauf von 15 Minuten in eine Mischung aus 200 ml Wasser und 200 ml 31 %iger Salzsäure zutropfen, erhitzte die gebildete Suspension auf 80 °C und rührte eine Stunde bei dieser Temperatur nach. Das Produkt wurde heiß abgesaugt und neutral gewaschen.

Der Preßkuchen wurde durch Zugabe von Wasser auf 1 055 g Gesamtgewicht eingestellt, 55 g Isobutanol zugegeben und die Mischung eine Stunde zum Sieden erhitzt. Anschließend wurde das Isobutanol bis zu einer Übergangstemperatur von 100 °C abdestilliert, das Pigment heiß abgesaugt und bei 80 °C getrocknet. Man erhielt 54,5 g eines Pigments, das sich hervorragend zum Färben von Metallic-Lacken eignet.

Beispiel 4

Man verfuhr gemäß Beispiel 3, legte jedoch 600 ml 31 %ige Salzsäure vor. So erhielt man 52,3 g Pigment, das sich aufgrund seiner extrem hohen Transparenz besonders zum Einfärben von Acrylharz- und Polyestermetallic-Lacken eignet.

Beispiel 5

Man verfuhr gemäß Beispiel 3, setzte jedoch nur 11 g Isobutanol zu. Man erhielt 52,6 g Pigment, das sich ebenfalls zum Färben von Metallic-Lacken eignet.

Beispiel 6

Man verfuhr gemäß Beispiel 3, setzte jedoch anstelle des Isobutanols Chlorbenzol zu. Man erhielt 51,5 g Pigment, das sich zum Färben von Metallic-Lacken eignet.

Beispiel 7

Man verfuhr gemäß Beispiel 3, setzte jedoch anstelle des Isobutanols 55 g Ethanol zu und erhitzte die Mischung 3 Stunden im Autoklav auf 125 °C. So erhielt man 50,4 g Pigment, das sich ebenfalls zum Färben von Metallic-Lacken eignet.

Beispiel 8

Man verfuhr gemäß Beispiel 3, setzte jedoch beim Lösen des Perylen-3,4,9,10-tetracarbonsäuredianhydrids nur 500 ml Wasser ein und verwendete anstelle der 10 g Harzseife 5 g Kolophonium. So erhielt man 51,7 g Pigment, das sich ebenfalls zum Färben von Metallic-Lacken eignet.

Beispiel 9

Man verfuhr gemäß Beispiel 3, setzte jedoch nur 5 g der 50 %igen Harzseife zu. So wurden 51,2 g Pigment erhalten, das sich ebenfalls zum Färben von Metallic-Lacken eignet.

Beispiel 10

Man verfuhr gemäß Beispiel 3, setzte jedoch 20 g der 50 %igen Harzseife zu. So erhielt man 58,1 g Pigment, das sich ebenfalls zum Färben von Metallic-Lacken eignet.

Beispiel 11

Man verfuhr gemäß Beispiel 3, erhitzte jedoch nach Zugabe des Isobutanols 5 Stunden zum Sieden. So erhielt man ebenfalls 54,5 g Pigment, das sich zum Färben von Metallic-Lacken eignet.

Beispiel 12

Man verfuhr gemäß Beispiel 3, erhitzte jedoch die nach Eintropfen in die Säure erhaltene Suspension 3 Stunden auf 80 °C. So erhielt man 53,3 g eines Pigments, das sich zum Färben von Metallic-Lacken eignet.

Beispiel 13

Man verfuhr nach Beispiel 3, erhitzte jedoch die durch das Eintropfen in die Säure erhaltene Suspension eine Stunde auf 100 °C. So erhielt man 53,6 g Pigment, das sich zum Färben von Metallic-Lacken eignet.

Beispiel 14

Man verfuhr gemäß Beispiel 3, rührte jedoch die beim Eintropfen in die Säure erhaltene Suspension 24 Stunden bei 25 °C. So erhielt man 52,1 g eines Pigments, das sich zum Färben von Metallic-Lacken eignet.

**Patentansprüche**

1. Verfahren zur Herstellung eines Perylen-3,4,9,10-tetracarbonsäuredianhydrid-Pigments, dadurch gekennzeichnet, daß man die wäßrige Lösung eines Alkalisalzes der Perylen-3,4,9,10-tetracarbonsäure unter Zusatz oberflächenaktiver Mittel bei 0 bis 90 °C, vorzugsweise 0 bis 30 °C, in eine vorgelegte Säure bei einem pH-Wert unter 3 einlaufen läßt und die erhaltene Suspension bei 50 bis 150 °C in das Dianhydrid überführt.

2. Verfahren nach Anspruch 1, dadurch gekennzeichnet, daß man die wäßrige Alkalisalzlösung aus Perylen-3,4,9,10-tetracarbonsäure und überschüssigem wäßrigem Alkali herstellt und die Säure in einem Überschuß von 0,1 bis 6 Äquivalenten, bezogen auf eingesetztes Alkali, vorlegt.

3. Verfahren nach Anspruch 1 und 2, dadurch gekennzeichnet, daß man nach der Bildung des Dianhydrids die 0,1 bis 30-fache Gewichtsmenge eines organischen Lösemittels, bezogen auf das Dianhydrid, zusetzt und das Gemisch bei 35 bis 200 °C nachbehandelt.

4. Verfahren nach Anspruch 3, dadurch gekennzeichnet, daß man das Lösemittel dem feuchten Preßkuchen des Dianhydrids zusetzt und die Nachbehandlung bei 70 bis 120 °C durchführt.

5. Verfahren nach Anspruch 3 und 4, dadurch gekennzeichnet, daß man die 0,5 bis 5-fache Gewichtsmenge Lösemittel, bezogen auf das Dianhydrid, zusetzt.

6. Verfahren nach Anspruch 1 bis 5, dadurch gekennzeichnet, daß man 0,1 bis 30 %, bezogen auf das Gewicht des Dianhydrids, an oberflächenaktiver Substanz zusetzt.

7. Verfahren nach Anspruch 1 bis 6, dadurch gekennzeichnet, daß man 1 bis 10 %, bezogen auf das Gewicht des Dianhydrids, an oberflächenaktiver Substanz zusetzt.

8. Verfahren nach Anspruch 1 bis 7, dadurch gekennzeichnet, daß als oberflächenaktive Substanz eine Seife oder ein alkalilösliches Harz zugesetzt wird.

9. Perylen-3,4,9,10-tetracarbonsäuredianhydrid-Pigmente, dadurch gekennzeichnet, daß sie nach einem der Verfahren gemäß Anspruch 1 bis 8 erhalten wurden.

10. Verwendung der Pigmente nach Anspruch 9 zum Färben von Metallic-Lacken.

**Claims**

1. A process for the manufacture of a perylene-3,4,9,10-tetracarboxylic acid dianhydride pigment, which comprises adding the aqueous solution of an alkali metal salt of perylene-3,4,9,10-tetracarboxylic acid, with addition of surfactants, at 0 to 90 °C, preferably at 0 to 30 °C, to an acid at a pH below 3 and converting the suspension obtained to the dianhydride at 50 to 150 °C.

2. The process of claim 1, which comprises preparing the aqueous alkali metal salt solution from perylene-3,4,9,10-tetracarboxylic acid and an excess of aqueous alkali and using the acid in an excess of from 0,1 to 6 equivalents, referred to the total amount of alkali.

3. The process of claims 1 and 2, which comprises adding the 0.1 to 30-fold weight quantity of an organic solvent, referred to the dianhydride, after formation of the dianhydride, and aftertreating the mixture at 35 to 200 °C.

4. The process of claim 3, which comprises adding the solvent to the humid filter cake of the dianhydride and carrying out the aftertreatment at a temperature of from 70 to 120 °C.

5. The process of claims 3 and 4, which comprises adding the 0.5 to 5-fold weight quantity of solvent, referred to the dianhydride.

6. The process of any of claims 1 to 5, which comprises adding from 0.1 to 30 %, referred to the weight of the dianhydride, of a surfactant.

7. The process of any of claims 1 to 6, which comprises adding from 1 to 10 %, referred to the weight of the dianhydride, of a surfactant.

8. The process of any of claims 1 to 7, which comprises adding as surfactants a soap or a resin soluble in alkalis.

9. Perylene-3,4,9,10-tetracarboxylic acid dianhydride pigments, characterized in that they have been obtained by any of the processes as claimed in any of claims 1 to 8.

10. Use of the pigments of claim 9 for dyeing metallic varnishes.

**Revendications**

1. Procédé de préparation d'un pigment de dianhydride de l'acide pérylène-3,4,9,10 tétracarboxylique, procédé caractérisé en ce que l'on verse la solution aqueuse d'un sel de métal alcalin de l'acide pérylène-3,4,9,10 tétracarboxylique en présence d'un agent surfactif, entre 0 et 90 °C, de préférence entre 0 et 30 °C, dans un acide à un pH inférieur à 3, puis on chauffe la suspension formée entre 50 et 150 °C pour former le dianhydride.

2. Procédé selon la revendication 1, caractérisé en ce que l'on prépare la solution aqueuse du sel alcalin à partir de l'acide pérylène-3,4,9,10 tétracarboxylique et d'un excès de l'alcali aqueux, et on verse la solution dans un excès de l'acide de 0,1 à 6 équivalents par rapport à l'alcali employé.

3. Procédé selon la revendication 1 ou 2, caractérisé en ce qu'après la formation du dianhydride, on ajoute 0,1 à 30 fois son poids d'un solvant organique, puis on traite le mélange entre 35 et 200 °C.

4. Procédé selon la revendication 3, caractérisé en ce que l'on ajoute le solvant au gâteau de pressage humide du dianhydride et on traite entre 70 et 120 °C.

5. Procédé selon la revendication 3 ou 4, caractérisé en ce qu'après la formation du dianhydride on lui ajoute 0,5 à 5 fois son poids de solvant.

6. Procédé selon l'une quelconque des revendications 1 à 5, caractérisé en ce que l'on ajoute 0,1 à 30 % de l'agent surfactif par rapport au poids du dianhydride.

7. Procédé selon l'une quelconque des revendications 1 à 6, caractérisé en ce que l'on ajoute 1 à 10 % de l'agent surfactif par rapport au poids du dianhydride.

8. Procédé selon l'une quelconque des revendications 1 à 7, caractérisé en ce que l'on ajoute comme agent surfactif un savon ou une résine soluble dans les alcalis.

9. Les pigments de dianhydride de l'acide pérylène-3,4,9,10 tétracarboxylique qui ont été obtenus par un procédé selon l'une quelconque des revendications 1 à 8.

10. L'utilisation des pigments selon la revendication 9 pour colorer des vernis métallisés.